Europäisches Patentamt

European Patent Office

Office européen des brevets

(19)

(11) Veröffentlichungsnummer: **0 188 772**

**A2**

(12) **EUROPÄISCHE PATENTANMELDUNG**

(21) Anmeldenummer: 85116227.1

(22) Anmeldetag: 19.12.85

(51) Int. Cl.⁴: **G01D 5/16**

(30) Priorität: 24.12.84 DE 3447325

(43) Veröffentlichungstag der Anmeldung:
30.07.86 Patentblatt 86/31

(84) Benannte Vertragsstaaten:
AT CH DE FR GB IT LI SE

(71) Anmelder: **Standard Elektrik Lorenz
Aktiengesellschaft
Lorenzstrasse 10
D-7000 Stuttgart 40(DE)**
Anmelder: **International Standard Electric
Corporation
320 Park Avenue
New York New York 10022(US)**

(72) Erfinder: **Heck, Wolfgang
Ludwigstrasse 20
D-7016 Gerlingen(DE)**
Erfinder: **Kersten, Peter, Dr.
Neuköllner Strasse 8
D-7250 Leonberg(DE)**
Erfinder: **Volz, Hans, Dr.
Liegnitzer Strasse 4
D-7141 Schwieberdingen(DE)**

(74) Vertreter: **Pohl, Heribert, Dipl.-Ing et al
Standard Elektrik Lorenz AG Patent- und
Lizenzwesen Kurze Strasse 8 Postfach 300 929
D-7000 Stuttgart 30(DE)**

(54) **Positionsgeber.**

(57) Ein Positionsgeber mit einem Detektor oder mit wenigstens einem flächenhaften, streifenförmigen, an den Enden an eine Ausgangsspannung anschließbaren magnetfeldabhängigen Widerstand, sowie einer relativ zu diesem bewegbaren magnetisierbaren Einrichtung mit quer zur Bewegungsrichtung verlaufenden Abschnitten abwechselnd unterschiedlicher Induktionskonstante, wobei der magnetfeldabhängige Widerstand parallel und im Abstand zu diesen Abständen angeordnet ist, ist zwecks Erhöhung des Auflösungsvermögens erfindungsgemäß durch folgende Merkmale gekennzeichnet:

- der magnetfeldabhängige Widerstand (4) besteht aus ferromagnetischem Material;

- der magnetfeldabhängige Widerstand (4) weist eine Dicke von maximal 0,5 μm auf;

- der magnetfeldabhängige Widerstand (4) weist in Längsrichtung der Streifen Anisotropie auf;

- die Einrichtung (9) ist zumindest im Bereich des magnetfeldabhängigen Widerstandes (4) in oder entgegen der Bewegungsrichtung magnetisiert.

Fig. 1

Positionsgeber

Die vorliegende Erfindung bezieht sich auf einen Positionsgeber gemäß dem Oberbegriff des Anspruchs 1.

Ein derartiger Positionsgeber ist bekannt aus der DE--OS 24 26 420. Mit dieser Einrichtung soll ein hohes Auflösungsvermögen und eine hohe Empfindlichkeit ermöglicht werden. Zu diesem Zweck sind dort die magnetfeldabhängigen Halbleiterelemente in einer Ebene der Induktorfläche vorgesehen und die streifenförmigen magnetfeldabhängigen Halbleiterwiderstände besitzen eine Breite von beispielsweise 100 μm und eine Dicke von etwa 20 μm. Der Abstand der detektierten Abschnitte beträgt daher ebenfalls mindestens 100 μm.

Mit der vorliegenden Erfindung soll die Aufgabe gelöst werden, das Auflösungsvermögen derartiger Positionsgeber noch weiter zu steigern.

Erfindungsgemäß wird dies durch die im Kennzeichen des Anspruchs 1 angegebenen Merkmale erreicht. Da die verwendeten magnetfeldabhängigen Widerstände eine nichtlineare Kennlinie besitzen, erhält man an jedem Ende eines Abschnittes, also z.B. an jeder Zahnflanke einer Zahnscheibe, einen gleichen Ausschlag und damit die doppelte Anzahl von Impulsen gegenüber bisherigen Positionsgeber der oben genannten Art, was gleich bedeutend ist mit einer zweifach höheren Auflösung. Außerdem kann der Abstand der Abschnitte in der Größenordnung der Dicke der magnetfeldabhängigen Widerstände gewählt werden, die wesentlich geringer ist als die Breite der bekannten Streifen, so daß hierdurch eine weitere Erhöhung der Auflösung erreicht wird.

Weitere vorteilhafte Einzelheiten der Erfindung sind in den Unteransprüchen angegeben und nachfolgend anhand der in der Zeichnung veranschaulichten Ausführungsbeispiele beschrieben.

Es zeigen:

Fig. 1 eine Ausführung mit einem Sensor und einer auf einem Substrat aufgebrachten Streufeldmaske,

Fig. 2 eine schematische Darstellung der Anordnung gemäß Fig. 1 mit einem Erregermagnet,

Fig. 3 die Anordnung eines Sensorpaares auf einem gemeinsamen Substrat,

Fig. 4 die Anordnung von zwei Sensorpaaren bezüglich einer gemeinsamen magnetisierbaren Einrichtung,

Fig. 5 eine Ausführungsart eines Sensorpaares,

Fig. 6 die Ausführung eines aus zwei Sensorpaaren gemäß

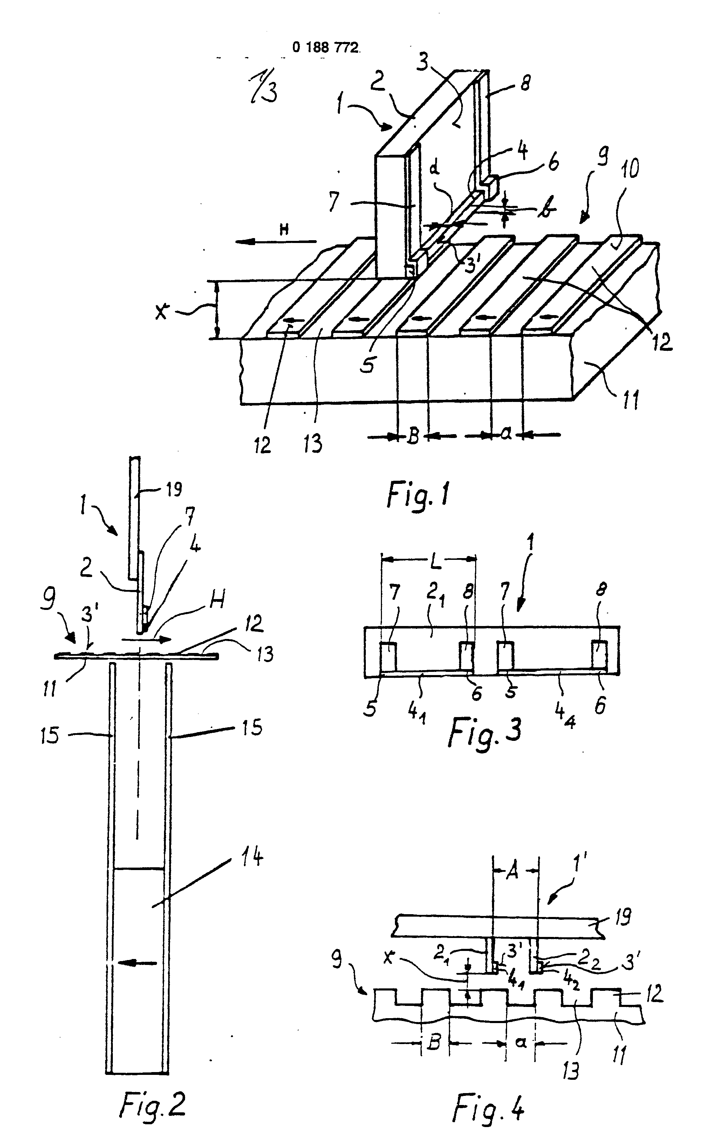

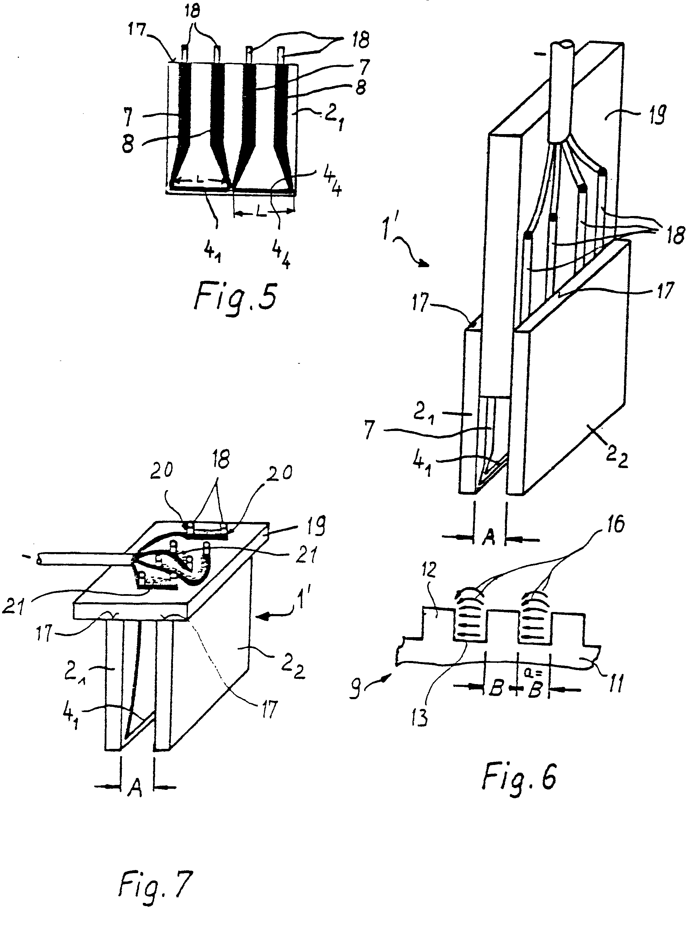

Fig. 3 oder 5 aufgebauten Detektors,

Fig. 7 eine weitere Ausführungsmöglichkeit eines Detektors aus zwei Einheiten gemäß Fig. 5,

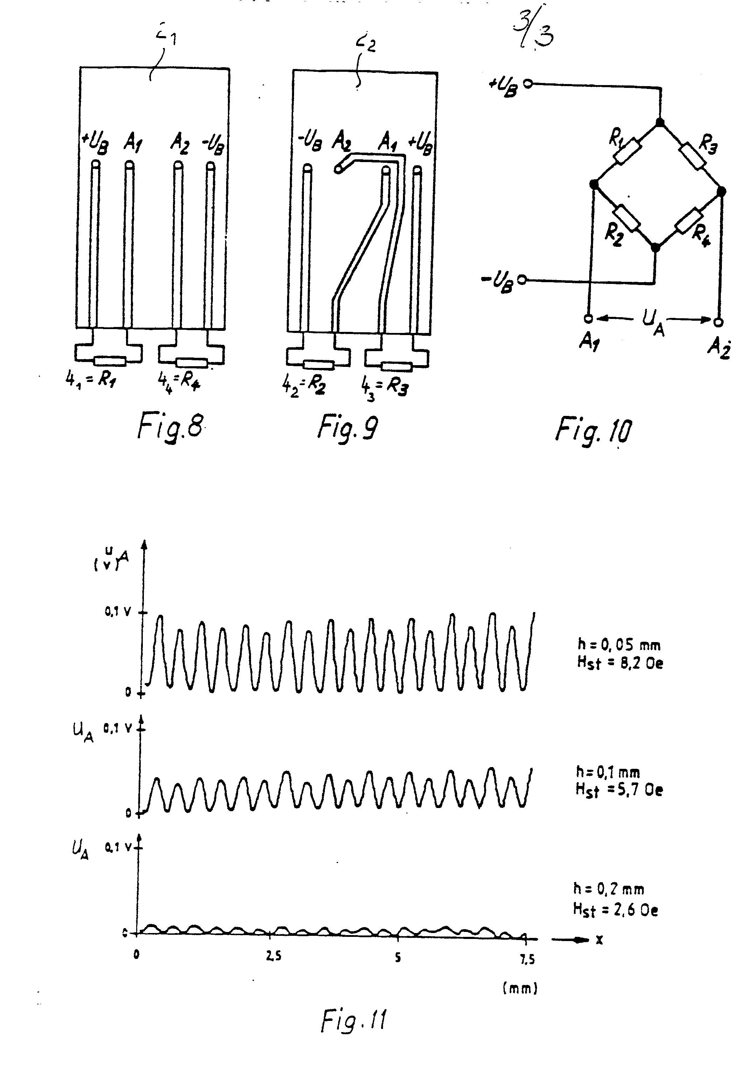

Fig. 8, 9 und 10 die Anordnung und Zuordnung von vier Sensoren zu einer Brückenschaltung und

Fig. 11 die Meßkurven der erhaltenen Ausgangsspannungen in Abhängigkeit des Abstandes der Sensoren von der magnetisierbaren Einrichtung.

Mit 1 ist ein Detektor zur Detektion von magnetischen Feldern bezeichnet. Dieser besteht aus einem Träger 2, auf dessen Oberfläche 3 am unteren Rand ein in Dünnschicht aufgebrachter streifenförmiger magnetfeldabhängiger, ferromagnetischer Widerstand 4 aufgebracht ist. Die Schichtdicke d des magnetfeldabhängigen Widerstandes 4 beträgt etwa bis zu 0,5 μm. Die Herstellung dieses Streifens erfolgt beispielsweise in an sich bekannter Weise durch Sputtern einer CoFeB-Legierung. Als Träger dient beispielsweise Glas oder Keramik. Die Enden 5, 6 den magnetfeldabhängigen Widerstandes 4 sind mit Kontaktstreifen 7, 8 elektrisch leitend verbunden, die ebenfalls auf dem Träger 2 aufgebracht sind.

Unterhalb des Detektors 1 ist in geringem Abstand x eine magnetisierbare Einrichtung 9 vorgesehen. Diese besitzt über ihrer Oberfläche 10 ein periodisch wechselndes magnetisches Feld. Ein solches wird im Beispiel gemäß Fig. 1 durch eine sog. Streufeldmaske gebildet, die aus einem nichtmagnetischen oder weich- oder hartmagnetischen, beispielsweise streifen- oder ringförmigen Substrat 11 besteht, auf dem quer zur Längsrichtung verlaufende weich- oder hartmagnetische Streifen 12 vorgesehen sind. Die Magnetisierungsrichtung H ist in allen Streifen 12 gleichsinnig und verläuft wenigstens annähernd in oder entgegen der Bewegungsrichtung oder Längsrichtung des Substrats 11. Hierdurch besitzt die Einrichtung 9 an der Oberseite 10 Abschnitte 12 mit der Breite B mit höherer Induktionskonstante und Zwischenräume oder Abschnitte 13 mit kleinerer Induktionskonstante. Letztere Abschnitte 13 besitzen eine Breite a, die vorzugsweise gleich dem Abstand B ist.

In den Abschnitten 13 befinden sich vorzugsweise Luft oder nichtmagnetisches Metall wie Aluminium etc. oder ein Dielektrikum. Über der Oberfläche 10 bildet sich dadurch ein Magnetfeld mit periodisch abwechselnd höherer und niedrigerer Feldliniendichte und abwechselnd unterschiedlicher Feldlinienrichtung aus, wenn zumindest die Streifen 12 in der genannten Richtung permanentmagnetisch oder magnetisiert sind. Bei Verwendung eines nicht permanentmagnetischen dünnen Substrats 11 oder weichmagnetischer Streifen 12 wird z.B. unter dem Substrat 11 ein Magnet 14 z.B. mit zum Substrat 11 weisenden seitlichen Jochen 15 vorgesehen, der die Magnetisierung der Streifen 12 und gegebenenfalls auch des Substrats 11 in Richtung des Feldes H bewirkt (Fig. 2).

Die Einrichtung 9 und der Detektor 1 sind relativ zueinander beweglich. Überlicherweise ist die Einrichtung 9 als Rad oder Ring ausgebildet und drehbar gelagert und bildet dann zweckmäßig eine Zahnscheibe oder einen gezahnten Ring.

Es wurde festgestellt, daß ferromagnetische Schichten der angegebenen Schichtdicke und der Anisotropie in Richtung der Längserstreckung des Streifens nur auf Magnetfelder in der Schichtebene ansprechen. Gemäß der Erfindung ist der magnetfeldabhängige Widerstand 4 daher nur in einer Dimension, nämlich der Länge desselben, insbesondere bereits bei der Herstellung, einem solchen magnetischen Feld ausgesetzt, daß die genannte Richtung eine leichte Richtung ist. Wirkt auf einen solchen magnetfeldabhängigen Widerstand ein Magnetfeld mit einer Komponente in Schichtebene senkrecht zur leichten Richtung ein, so ändert sich der zwischen den Kontaktstreifen 7, 8 zu messende Widerstand. Dieser Effekt wird bei der vorliegenden Erfindung zur Detektion kleiner Magnetfelder ausgenutzt, da die angegebene Widerstandsänderung bereits bei sehr kleinen Feldstärken auftritt. Trotzdem treten keine Störungen durch äußere Magnetfelder auf.

Durch die Abschnitte 12, 13 mit unterschiedlicher Induktionskonstante erhält man über jedem Abschnitt 12, 13 Streufelder, die abwechselnd einander entgegengerichtet sind. Dies ist in den Fig. 4 und 6 veranschaulicht. Folglich entsteht an jeder Flanke eines Zahnes oder Streifens eine Feldkomponente $H_{St}$, die senkrecht zum Feld H gerichtet ist. Diese Feldkomponente $H_{St}$ ist zwar sehr klein, beispielsweise in der Größenordnung von 80 bis 1.600 A/m (1 bis 20 Oe). Sie reicht jedoch aus, um den Widerstand des magnetfeldabhängigen Widerstandes 4 erheblich zu beeinflussen, wenn die Feldkomponente $H_{St}$ senkrecht zur Anisotropierichtung gerichtet ist. Die magnetfeldabhängigen Widerstände 4 sind daher mit ihrer Schichtebene 3' in Richtung der Feldkomponente $H_{St}$ angeordnet, wie in den Beispielen gezeigt.

Es ist jedoch auch möglich, die Schichtebene 3' in Bewegungsrichtung anzuordnen. In diesem Fall wird die in Bewegungsrichtung verlaufende Feldkomponente $H_L$ detektiert. Bei einer derartigen Anordnung ist jedoch darauf zu achten, daß bei einer durch einen Fremdmagneten erzeugten Magnetisierung, beispielsweise der Abschnitte 12, nicht das erzeugende Streufeld den magnetfeldabhängigen Widerstand bereits stark beeinflußt und ihn in die Sättigung bringen kann. Diese Art der Anordnung der Schichtebene 3' in Bewegungsrichtung ist daher in der Regel nur für permanent magnetisierte Abschnitte 12 anwendbar.

Gemäß einer vorteilhaften Ausgestaltung der Erfindung sind zwecks Erhöhung der möglichen Ausgangsspannung auf einem Träger 2 in einer Linie nebeneinander zwei elektrisch voneinander getrennte magnetfeldabhängige Widerstände $4_1$ und $4_4$ angeordnet. Die Länge L eines Streifens 12 oder eines Zahnes eines Zahnrades oder einer Zahnscheibe oder Zahnstange ist dann mindestens so groß, daß sich diese über die gesamte Länge des Widerstandspaares aus den beiden magnetfeldabhängigen Widerständen $4_1$ und $4_4$ erstrecken. Eine derartige Ausgestaltung eines Detektors 1 zeigen die Fig. 3 und 5, wobei in Fig. 5 am oberen Rand 17 Anschlußstifte 18 angebracht sind. Diese beiden magnetfeldabhängigen Widerstände $4_1$, $4_4$ können in einen diagonal gegenüberliegenden Brückenzweig einer Brücke angeordnet werden.

Gemäß einer der in den Fig. 4 und 6 bis 9 dargestellten Ausführungsformen sind jeweils zwei magnetfeldabhängige Widerstandspaare $4_1$, $4_4$ und $4_2$, $4_3$ zu einer Detektoreinheit 1' zusammengefaßt. Dabei sind die einen magnetfeldabhängigen Widerstände $4_1$ und $4_4$ auf einem ersten Träger $2_1$ und die beiden anderen magnetfeldabhängigen Widerstände $4_2$ und $4_3$ auf einem zweiten Träger $2_2$ vorgesehen. Die magnetfeldabhängigen Widerstände $4_2$ und $4_3$ können dann in den anderen Diagonalzweigen einer Brückenschaltung eingeschaltet werden, wie in Fig. 10 gezeigt. Hierdurch erhält man eine maximale Meßausgangsspannung $U_A$ an den Klemmen $A_1$ und $A_2$. Mit $+U_B$ und $-U_B$ ist dabei die Betriebsspannung bezeichnet, die beispielsweise bei einer Ausführung 10 Volt betrug.

Der Abstand A der Widerstandspaare $4_1$, $4_4$ und $4_2$, $4_3$ beträgt für eine optimale Meßwertgröße gleich der Anzahl n der zwischen den Widerstandspaaren vorhandenen Streifen 12 oder Abschnitte 13 plus der halben Breite B eines Streifens 12 gemäß der Formel $A = n \cdot a + \frac{B}{2}$ mit n = 0, 1, 2, ... . Die Höhe der Ausgangsspannung $U_A$ ist abhängig vom Abstand x zwischen den magnetfeldabhängigen Widerständen $4_1$ bis $4_4$ von der Oberfläche 10. Diese Abhängigkeit ist in den Meßkurven der Fig. 11 dargestellt.

Um eine stabile Detektoreinheit 1' zu erhalten, sind gemäß Fig. 6 die zwei Träger $2_1$, $2_2$ auf einer Montageplatte 19 angebracht. Diese besitzt eine Dicke, die dem erforderlichen Abstand A entspricht. Die beiden Träger $2_1$,

$2_2$ können auch gemäß Fig. 7 auf einer senkrecht zu diesen auf dem oberen Rand 17 angeordneten Montageplatte 19 befestigt sein. Letztere besitzt dann den Anschlußstifen 18 entsprechend angeordnete durchgehende Öffnungen 20. Letztere sind so angeordnet, daß beim Einstecken der Anschlußstifte 18 der beiden Träger $2_1$, $2_2$ der Abstand A erhalten wird und dieser ggf. justierbar ist. Die Montageplatte 19 kann in beiden Fällen nach Art einer gedruckten Schaltung mit den notwendigen Verbindungs- und/oder Zuführungsleitungen 21 versehen sein, wie gestrichelt in Fig. 7 dargestellt. Die Befestigung von Montageplatte 19 und Trägern $2_1$, $2_2$ aneinander erfolgt insbesondere durch Kleben und/oder Löten.

**Ansprüche**

1. Positionsgeber mit einem Detektor mit wenigstens einem flächenhaften, streifenförmigen, an den Enden an eine Ausgangsspannung anschließbaren magnetfeldabhängigen Widerstand, sowie einer relativ zu diesen bewegbaren magnetisierbaren Einrichtung mit quer zur Bewegungsrichtung verlaufenden Abschnitten abwechselnd unterschiedlicher Induktionskonstante, wobei der magnetfeldabhängige Widerstand parallel und im Abstand zu diesen Abschnitten angeordnet ist, **gekennzeichnet durch** folgende Merkmale

- der magnetfeldabhängige Widerstand ($4$; $4_1$ .... $4_4$) besteht aus ferromagnetischem Material;

- der magnetfeldabhängige Widerstand ($4$; $4_1$ .... $4_4$) weist eine Dicke von maximal 0,5 $\mu$m auf;

- der magnetfeldabhängige Widerstand ($4$; $4_1$ ... $4_4$) weist eine einachsige Anisotropie mit der leichten Richtung parallel zum Streifen auf;

- die Einrichtung ($9$; $11$, $12$, $13$) ist zumindest im Bereich des magnetfeldabhängigen Widerstandes ($4$; $4_1$ .... $4_4$) in oder entgegen der Bewegungsrichtung magnetisiert.

2. Positionsgeber nach Anspruch 1, dadurch gekennzeichnet, daß zwei elektrisch voneinander getrennte magnetfeldabhängige Widerstände ($4_1$, $4_4$; $4_2$, $4_3$) in einer Linie nebeneinander auf einem gemeinsamen Träger ($2_1$; $2_2$) vorgesehen sind.

3. Positionsgeber nach Anspruch 2, dadurch gekennzeichnet, daß die Abschnitte ($12$, $13$) unterschiedlicher Induktionskonstante gleiche Breite (B) aufweisen, und daß zwei Träger ($2_1$, $2_2$) mit je zwei elektrisch getrennten magnetfeldabhängigen Widerständen ($4_1$, $4_4$; $4_2$, $4_3$) parallel zueinander derart angeordnet sind, daß die jeweiligen Widerstandspaare ($4_1$, $4_4$ bzw. $4_2$, $4_3$) einen Abstand $A = (2 \cdot n + 1) \cdot \frac{B}{2}$ aufweisen, wobei n = 0,1,2 ... die Zahl der zwischen dem magnetfeldabhängigen Widerstandspaaren befindlichen Abschnitte ist.

4. Positionsgeber nach einem der Ansprüche 1 bis 3, dadurch gekennzeichnet, daß die Einrichtung ($9$; $11$, $12$, $13$) eine die Abschnitte ($12$, $13$) aufweisende Streufeldmaske enthält.

5. Positionsgeber nach einem der Ansprüche 1 bis 3, dadurch gekennzeichnet, daß die Einrichtung ($9$; $11$, $12$, $13$) als Zahnstange oder Zahnscheibe ausgebildet ist.

6. Positionsgeber nach einem der Ansprüche 1 bis 5, dadurch gekennzeichnet, daß die Abschnitte (12, 13) abwechselnd aus unmagnetischem und magnetischem Material bestehen.

7. Positionsgeber nach einem der Ansprüche 1 bis 6, dadurch gekennzeichnet, daß die magnetischen Abschnitte (12) bzw. die Abschnitte (12) mit höherer Induktionskonstante und ggf. auch deren Träger (11) aus weichmagnetischem Material bestehen, die zumindest im Bereich der magnetfeldabhängigen Widerstände (4; $4_1$ ... $4_4$) durch ein konstantes Magnetfeld in oder entgegen der Bewegungsrichtung magnetisiert sind und daß die Fläche (3') der magnetfeldabhängigen Widerstände (4; $4_1$ ... $4_4$) zumindest nahezu senkrecht zur Bewegungsrichtung und zur Fläche (10) der Abschnitte (12) steht.

8. Positionsgeber nach einem der Ansprüche 1 bis 6, dadurch gekennzeichnet, daß die magnetischen Abschnitte (12) bzw. die Abschnitte (12) mit höherer Induktionskonstante und ggf. auch deren Träger (11) aus hartmagnetischem Material bestehen und diese Abschnitte (12) in oder entgegen der Bewegungsrichtung magnetisiert sind.

9. Positionsgeber nach Anspruch 8, dadurch gekennzeichnet, daß die magnetfeldabhängigen Widerstände (4; $4_1$ ... $4_4$) mit ihrer Fläche (3') parallel zur Bewegungsrichtung und parallel zur Oberfläche (10) der Abschnitte (12, 13) angeordnet sind.

10. Positionsgeber nach einem der Ansprüche 1 bis 9, dadurch gekennzeichnet, daß bei Verwendung von ein oder zwei Widerstandspaaren ($4_1$, $4_4$; $4_2$, $4_3$) auf jeweils einem gemeinsamen Träger ($2_1$, $2_2$) und bei Anwendung derselben in einer Brückenschaltung je ein magnetfeldabhängiger Widerstand ($4_1$ bzw. $4_4$; $4_2$ bzw. $4_3$) je eines Widerstandspaares in einem jeweils dem anderen magnetfeldabhängigen Widerstand ($4_4$ bzw. $4_2$; $4_3$ bzw. $4_2$) diagonal gegenüberliegenden Brückenzweig eingeschaltet ist bzw. sind.

11. Positionsgeber nach einem der Ansprüche 1 bis 10, dadurch gekennzeichnet, daß am oberen, dem magnetfeldabhängigen Widerstand ($4_1$ ... $4_4$) gegenüberliegenden Rand (17) des bzw. der Träger(s) (2; $2_1$, $2_2$) abstehende Anschlußstifte (18) vorgesehen sind.

12. Positionsgeber nach einem der Ansprüche 1 bis 11, dadurch gekennzeichnet, daß bei zwei Widerstandspaaren ($4_1$, $4_4$; $4_2$, $4_3$) deren Träger ($2_1$, $2_2$) an je einer Seite einer Montageplatte (19) angebracht sind, deren Dicke dem erforderlichen Abstand (A) zwischen den Widerstandspaaren ($4_1$, $4_4$; $4_2$, $4_3$) entspricht.

13. Positionsgeber nach einem der Ansprüche 1 bis 11, dadurch gekennzeichnet, daß bei zwei Widerstandspaaren ($4_1$, $4_4$; $4_2$, $4_3$) eine Montageplatte (19) auf dem oberen Rand (17) der Träger ($2_1$, $2_2$) vorgesehen ist, die mit Öffnungen (20) für die Anschlußstifte (18) versehen ist und daß die Öffnungen (20) derart angeordnet sind, daß sich bei eingesetzten Trägern ($2_1$, $2_2$) wenigstens annähernd deren erforderlicher Abstand (A) ergibt.

14. Positionsgeber nach einem der Ansprüche 1 bis 13, dadurch gekennzeichnet, daß der Träger (2; $2_1$, $2_2$) aus Glas oder Keramik besteht.

1/3

Fig.1

Fig.2

Fig.3

Fig.4

W. Heck - P. Kersten - H. Volz   14-11-12

Fig.5

Fig.6

Fig.7

W. Heck - P. Kersten - H. Volz 14-11-12

Fig.8

Fig.9

Fig. 10

h = 0,05 mm
$H_{st}$ = 8,2 Oe

h = 0,1 mm
$H_{st}$ = 5,7 Oe

h = 0,2 mm
$H_{st}$ = 2,6 Oe

Fig.11

W. Heck - P. Kersten - H. Volz 14-11-12